# EUROPEAN PATENT APPLICATION

(11) **EP 4 738 116 A1**
(43) Date of publication of application: **06.05.2026**
(21) Application number: 25211123.2
(22) Date of filing: 24.10.2025
(51) Int. Cl.: G06F 9/48, G06F 9/50, G06F 11/34, G06N 3/08, G06N 3/092, G06N 20/00

(54) **ARTIFICIAL INTELLIGENCE (AI) PROCESS SCHEDULER FOR OPTIMIZING RESOURCE UTILIZATION IN COMPUTING ENVIRONMENTS**

(30) Priority: 31.10.2024 US 202418932908
(71) Applicant: NCR Voyix Corporation, Atlanta, GA 30308 (US)
(72) Inventor: ABADI, Shiran, Tel-Aviv (IL); HAIZLER, Tamar Miriam, Kfar-Saba (IL)
(74) Representative: Secerna LLP

(57) **Abstract**

An artificial intelligence (AI) machine learning model learns from historical process data and current system state to optimize scheduling of processes within defined time frames. The model analyzes previous runtimes, resource usage, and available system resources to predict optimal execution times. The processes are triggered or initiated within a computing environment based on output from the model and during allowed periods, spreading resource utilization across the timeline to avoid resource overloads. This approach reduces system configuration requirements and costs by eliminating the need for large-scale setups to handle periodic spikes. The Al model continuously adapts to new services and changing conditions, providing a centralized, low-maintenance solution applicable across various platforms and services. This method improves overall data center efficiency, reduces the likelihood of failures due to overload, and optimizes resource allocation.

## Description

### Background

Systems for running different processes, such as creating machine learning predictions, synchronizing information such as updated catalog prices, or copying data, often use orchestrators that run each process at a time defined by the user at setup. At the expected time, the system runs all scheduled processes, even if multiple processes were set to run simultaneously. This can lead to system overload, requiring more resources to be allocated to support the high traffic. To account for this, systems may be configured to enable sudden resource allocation, which often necessitates larger configurations than are typically needed. For example, a system might be configured to a "large" size to support periodic overloads, even though it operates at minimal usage the majority of the time. Such inefficient resource allocation leads to higher maintenance costs and potential system failures during peak usage periods, while leaving resources underutilized during off-peak times.

### Summary

According to a first aspect of the present invention there is provided a method, comprising:
receiving, by a machine learning model (MLM), historical data of at least one process and at least one current state from a computing environment; obtaining, by the MLM, at least one acceptable time frame for each process within which the at least one process is to be executed within the computing environment; determining, by the MLM, at least one execution time for the at least one process; triggering the at least one process to run at the at least one execution time; and monitoring, by the MLM, resource utilization for the computing environment across a timeline during execution of the at least one process.

Aptly, wherein receiving further comprises identifying, from the historical data, runtime and usage information for the at least one process within the computing environment.

Aptly, wherein receiving further comprises identifying, from the at least one current state, one or more of available resources or waiting processes in the computing environment.

Aptly, wherein obtaining further comprises associating the at least one acceptable time frame with the at least one process.

Aptly, wherein determining further comprises avoiding peaks and valleys in resource utilization within the computing environment during execution of the at least one process.

Aptly, wherein triggering further comprises assigning penalties when resource usage spikes are encountered during execution of the at least one process and when the at least one execution time is not within the at least one acceptable time frame.

Aptly, wherein monitoring further comprises tracking processor load, memory load, disk load, and network bandwidth usage within the computing environment.

Aptly, the method further comprises assigning penalties when resource usage spikes are encountered during execution of the at least one process.

Aptly, the method further comprises adapting scheduling strategies based on monitored resource utilization to optimize further executions of the at least one process within the computing environment.

Aptly, the method further comprises generating at least one visual graphic of resource loads during execution of the at least one process within the computing environment.

Aptly, the method further comprises receiving user-inputted criteria and generating at least one report based the user-inputted criteria and monitored resource utilization.

According to a second aspect of the present invention there is provided a method, comprising:
performing an initial training on a machine learning model (MLM) using historical data of processes and states for a computing environment; deploying a trained MLM to optimize process scheduling within the computing environment; learning, by the trained MLM, from experience associated with attempting process runs at different times within allowed time frames; rewarding the trained MLM for completing the process runs on time while a basal load is maintained within the computing environment; penalizing the trained MLM for causing resource overloads or failing to complete the process runs within the allowed time frames; and continuously refining, by the trained MLM, scheduling strategies to achieve optimal resource utilization and process completion within the allowed time frames.

Aptly, wherein performing further comprises creating a simulated environment that mimics the computing environment for the initial training.

Aptly, wherein performing further comprises using a reinforcement learning algorithm while training the MLM.

Aptly, wherein learning further comprises exploring optimal execution times for maintaining the basal load of the computing environment.

Aptly, wherein penalizing further comprises automatically assigning penalties to particular processes when resource usage spikes are encountered.

Aptly, the method further comprises evaluating a performance of the trained MLM based on overall peak and valley resource loads within the computing environment.

Aptly, the method further comprises adapting the trained MLM to new processes being added to the computing environment.

According to a third aspect of the present invention there is provided a system, comprising:
a processor;
a non-transitory computer-readable storage medium comprising instructions;
the instructions when executed by the processor cause the processor to perform operations comprising:
   performing an initial training on a machine learning model (MLM) using historical data of processes and states for a computing environment;
   deploying the trained MLM to optimize process scheduling within the computing environment;
   receiving, by the trained MLM, updated historical data of the processes and current states for the computing environment;
   obtaining, by the trained MLM, allowed time frames for each process within which a corresponding process is to be executed within the computing environment;
   determining, by the trained MLM, execution times for the processes;
   triggering the processes to run at the execution times;
   monitoring, by the trained MLM, resource utilization across a timeline during execution of the processes;
   learning, by the trained MLM, from experience by attempting process runs at different times within the allowed time frames;
   rewarding the trained MLM for completing the process runs on time and maintaining a basal load for the computing environment;
   penalizing the trained MLM for causing resource overloads or failing to complete the process runs within the allowed time frames; and
   continuously refining, by the trained MLM, scheduling strategies to achieve better resource utilization and completion of the process runs within the allowed time frames.

Aptly, wherein the operations further comprise: generating visual graphics of resource loads during the process runs; and presenting the visual graphics through a user interface to end users who are operating user-operated devices.

### Brief Description of the Drawings

FIG. 1 is a diagram of a system for operating a machine learning model (MLM) process scheduler, according to an example embodiment.
FIG. 2 is a flow diagram of a method for operating a MLM process scheduler, according to an example embodiment.
FIG. 3 is a flow diagram of another method for a MLM process scheduler, according to an example embodiment.

### Detailed Description

Systems for running different processes, such as creating machine learning predictions, synchronizing information such as updated catalog prices, or copying data, often use orchestrators that run each process at a time defined by the user at setup. The system runs all processes at their scheduled times, even if multiple processes are set to run concurrently. This can lead to system overload (e.g., computer engines, memory, etc.), requiring more resources to be allocated to support the high traffic.

Conventional systems are typically configured to enable sudden resource allocation, which necessitates larger configurations than are typically needed. For example, a system may be configured to a "large" size to support periodic overloads, even though it operates at minimal usage for the majority of the time. Such inefficient resource allocation leads to higher maintenance costs and potential system failures during peak usage periods, while leaving resources underutilized during off-peak times.

To demonstrate this problem, consider a scenario where a data digestion model runs once a day for each customer, taking approximately 15 minutes per customer. In a system serving 10,000 customers, if all processes are scheduled to run simultaneously, the system becomes overloaded, leading to resource allocation issues, potential failures, and extended run times that may last for several hours. Conversely, during the rest of the day, the system remains at minimal use, ready to be loaded again.

In embodiments presented herein, an artificial intelligence (AI) machine learning model (MLM) is employed to learn from the environment and decide when to run each process. The environment includes historical data of the processes (including runtime and resource usage) and the current state of the system (available resources and waiting processes).

According to example embodiments of the technology disclosed herein, a time frame is defined for each process, within which the MLM must run that process. The MLM learns from previous runs and makes predictions for the current time and the near future. The system then triggers the processes to run at the predicted times, optimizing resource utilization across the timeline by avoiding peaks and valleys in the resource utilization during the runs of the processes over the timeline. A time frame may be a time by which a given process is to be installed and started within a given computing environment. For example, a time frame for process X may be that it should be started and running by 5:00 a.m. every day, a time frame for process Y may be that it should be started and running by 2:00 a.m. every Tuesday, etc.

Example embodiments of the disclosed technology can be implemented using various machine learning techniques, such as reinforcement learning. In an embodiment, the MLM, acting as an agent, learns over time by attempting to schedule runs at different times within the allowed time frame. The agent is rewarded for completing processes on time and maintaining basal load, and conversely, is penalized for overloading the system.

Over time, the MLM learns the optimal scheduling strategy to gain more rewards by keeping the system at basal load and running all processes on time. This adaptive approach enables more efficient resource allocation, reducing the likelihood of system failures due to overload and optimizing overall system performance. In an embodiment, the MLM does not handle priority directly, but rather, defines what is unacceptable or what is acceptable. For example, it is unacceptable for process X to not be running by 5:00 am every day, and process X runs after process Y is running. The MLM assigns penalties for not meeting these requirements and adjusts its optimization accordingly.

The Al-based approach disclosed herein provides several technical benefits over traditional scheduling techniques. The Al-based approach can reduce software and maintenance costs by optimizing resource utilization, potentially saving a significant cost annually in staffing for a small platform or computing environment supporting just 60 customers. As the supported customers grow so do the savings. The Al-based approach adapts automatically to new processes being added, providing a centralized, low-maintenance solution applicable across various data centers, platforms, and/or computing environments.

As used herein, the term "run" is intended to mean that a process is being installed, initiated, started, and executed within a computing environment. The term "resource" is intended to mean a processor, a storage disk, network bandwidth, and/or memory. A "basal load" refers to a minimal or baseline level of resource utilization during normal operation. Maintaining a basal load is intended to mean keeping the resource usage (e.g., central processing unit (CPU) and/or processor, memory, disk, and/or network bandwidth) at a consistent, optimal level without sudden spikes or periods of underutilization.

As used herein, a "process" is a set of software instructions defined for an operation, a service, an application, and/or a system. The system can include a plurality of operations, services, and/or applications operating in concert with one another to provide features of the system. An application or service can include one or more sub operations, sub services, and/or sub applications to provide features of the application or service.

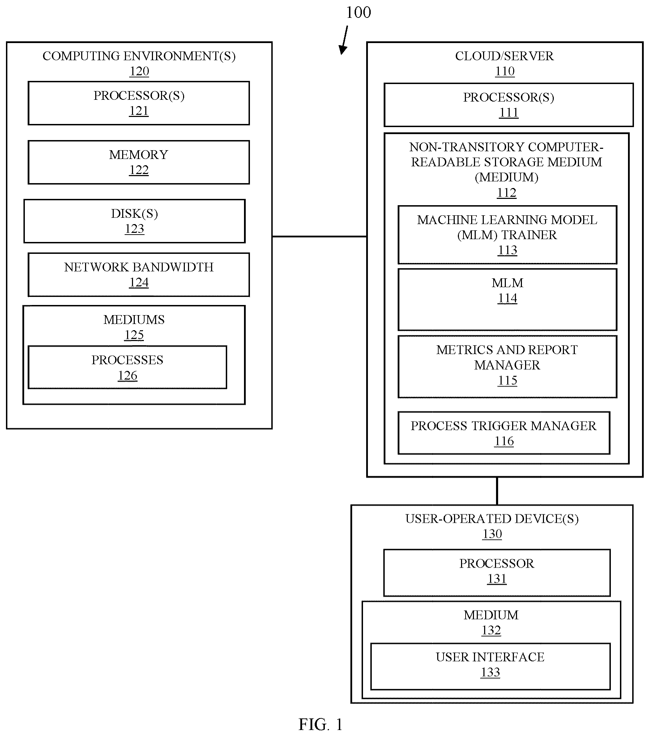

FIG. 1 is a diagram of a system 100 for operating an MLM process scheduler, according to an example embodiment. Notably, the components are shown schematically in greatly simplified form, with only those components relevant to understanding of the embodiments being illustrated.

Furthermore, the various components (that are identified in system/platform 100) are illustrated and the arrangement of the components are presented for purposes of illustration only. It is to be noted that other arrangements with more or less components are possible without departing from the teachings of predicting and identifying understaffed terminals for Al process scheduling and management, presented herein and below.

System 100 includes a cloud 110 or server, one or more computing environments 120, and one or more user-operated devices 130. Cloud 110 includes at least one processor 111 and a non-transitory computer-readable storage medium 112 (medium), which includes instructions for a MLM trainer 113, an MLM 114, a metrics and report manager 115, and a process trigger manager 116. The instructions when executed by the processor 111 cause the processor 111 to perform operations discussed herein and below with respect to 113-116.

Each computing environment 120 includes resources that include at least one processor 121, memory 122, at least one storage disk 123, and network bandwidth available to the corresponding computing environment 120. Each computing environment 120 further includes one or more mediums 125, which include instructions for processes 126. The instructions when executed by the processor 121 cause the processes 126 to perform operations associated with features of an operation, a service, an application, and/or a system associated with an enterprise.

Each user-operated device 130 includes at least one processor 131 and a medium 132, which includes instructions for a user interface (UI) 133. The instructions when executed by the processor 131 cause the processor 131 to perform operations discussed herein and below with respect to UI 133.

The MLM trainer 113 performs initial training on the MLM 114 using historical data of processes and current system states. The training process includes:
1. **Data Collection:** The MLM trainer 113 gathers historical data of processes, including their runtime, resource usage (e.g., CPU, memory, disk), and the time frames within which they must be executed.
2. **Environment Setup:** The MLM trainer 113 creates a simulated environment that mimics the actual computing environment, including available resources and typical process loads.
3. **Reinforcement Learning:** The MLM 114 is trained using a reinforcement learning approach. In this training:
   a. The MLM 114 acts as an agent that attempts to schedule process runs at different times within the allowed time frames.
   b. The agent receives rewards for completing processes on time and maintaining basal load.
   c. The agent is penalized when it causes system overloads or fails to complete processes within their required time frames.
4. **Optimization Goal:** During training, the MLM 114 seeks to minimize valleys and spikes in processor, memory, disk, and network bandwidth usages as processes are started, updated, and installed.
5. **Penalty Assignment:** The MLM 114 automatically assigns penalties to processes when resource usage spikes are encountered. This ensures that the MLM 114 adjusts its optimization strategy in scheduling accordingly. The MLM 114 assigns penalties for spikes or new processes 126 and adjusts its optimization to ensure it does not happen again. This allows MLM 114 to automatically adapt to changes in the computing environment 120 and maintain optimal performance at a basal load for the resources 121-124.
6. **Adaptation:** The training process allows the MLM 114 to learn from experience and adapt its scheduling strategy to optimize resource utilization across the timeline.
7. **Performance Metrics:** The MLM trainer 113 evaluates the MLM 114's performance based on overall peak and valley processor load, memory load, disk load, and/or network bandwidth.
8. **Iterative Improvement:** The training process is iterative, with the MLM 114 continuously refining its scheduling strategies to achieve better resource utilization and process completion within defined time frames.

By the end of the initial training, the MLM 114 develops the capability to make informed decisions about when to trigger processes within allowed time frames while spreading resource utilization across the timeline. The process trigger manager 116 executes, installs, starts, and/or initiates the processes 126 into the computing environment based on output predictions received from the MLM 114. This trained MLM 114 is then deployed to optimize process scheduling within the corresponding computing environments 120.

After training, the MLM 114 combined with the process trigger manager 116 replace an existing resource scheduler of a data center associated with computing environments 120. The MLM 114 learns from experience and will attempt process runs at different times within the allowed time frame for purposes of being rewarded if a particular process 126 completes on time and the overall computer environment 120 maintains a basal load. If the MLM 114 is penalized for lack of basal load on previous process runs, the MLM 114 learns what is better to do to avoid a same scenario in which the MLM 114 was penalized. The MLM 114 also learns the running times of the resources 121-124 during different process runs while exploring what is best or optimal to do for purposes of achieving more rewards by keeping the basal load of the computing environment 120 and run all processes 126 on time. The presented Al-driven scheduling system or scheduler can work for any data center and platform, making it a versatile solution for various computing environments 120. It can replace existing data center scheduling systems or schedulers completely, providing a unified approach to resource management across different processes 126 (i.e., operations, services, applications, and/or systems).

The MLM 114 decides when to trigger a process rather than using an orchestrator service or resource scheduler associated with a user-predefined schedule. The process trigger manager 116 installs and executes the process on behalf of the MLM 114 using the output predictions of the MLM 114. The API MLM 114 studies the running processes 126 and resources 121-124 within the computing environment 120 to intelligently orchestrate processes 126 for a platform associated with the computing environment 120 at maximum efficiency thereby reducing data center costs and likelihoods of failure because of resource overload.

Metrics and report manager 115 monitors performance of MLM 114 and maintain historical metrics associated with process runs and resource usage. Metrics and report manager 115 interacts with user interface (UI) 133 to permit end users of data centers, who are operating user-operated devices 130, to view resource loads during the process runs as performed independently by MLM 114. The metrics and report manager 115 can present metrics and reports. For example, the metrics and report manager 115 generates from process and resource metrics a visual graphic including a table, a graph, a heatmap, etc. presented within UI 133. The user can also input and/or view specific user-inputted criteria through the UI 133 and receive a report or a specific graphic for metrics relevant to the criteria back from metrics and report manager 115.

In an embodiment, the MLM 114 is implemented using a different technique from the reinforcement technique discussed herein. For example, the MLM 114 is implemented as an evolutionary algorithm, a genetic algorithm, a Monte Carlo tree search algorithm, a multi-armed bandit algorithm, an adaptive control system algorithm, a self-learning and self-play algorithm, etc.

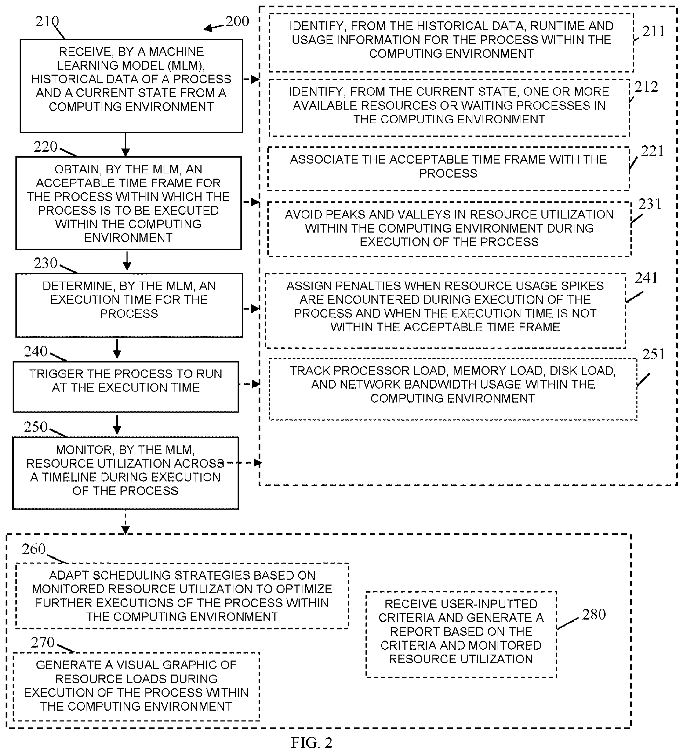

The above-referenced embodiments and other embodiments are now discussed within FIGS. 2-3. FIG. 2 is a flow diagram of a method 200 for operating an MLM process scheduler, according to an example embodiment. The software module(s) that implements the method 200 is referred to as an "autonomous process scheduler." The autonomous process scheduler is implemented as executable instructions programmed and residing within memory and/or a non-transitory computer-readable (processor-readable) storage medium and executed by one or more processors of one or more devices. The processor(s) of the device that executes the autonomous process scheduler are specifically configured and programmed to process the autonomous process scheduler. The autonomous process scheduler may have access to one or more network connections during its processing. The network connections can be wired, wireless, or a combination of wired and wireless.

In an embodiment, the device that executes the autonomous process scheduler is cloud 110. In an embodiment, the device that executes the autonomous process scheduler is a server. In an embodiment, the autonomous process scheduler is all or some combination of MLM trainer 113, MLM 114, metrics and report manager 115, and/or process trigger manager 116.

At 210, the autonomous process scheduler, using the MLM 114, receives historical data of at least one process and at least one current state from a computing environment 120. In an embodiment, at 211, the autonomous process scheduler identifies, from the historical data, runtime and usage information for the process within the computing environment. In an embodiment, at 212, the autonomous process scheduler identifies, from the current state, one or more available resources or waiting processes in the computing environment 120.

At 220, the autonomous process scheduler, using the MLM 114, obtains an acceptable time frame for the process within which the process is to be executed within the computing environment 120. In an embodiment, at 221, the autonomous process scheduler associates the acceptable time frame with the process.

At 230, the autonomous process scheduler, using the MLM 114, determines an execution time for the process. Notably, the MLM 114 may not decide to initiate the process into the computing environment within the acceptable time frame. However, when this occurs the MLM 114 is heavily penalized so that the MLM 114 learns not to determine a subsequent execution time that is outside the acceptable time frame. To be "penalized" means that the probability of the MLM 114 performing a same action, such as determining an execution time for a process, given a same state for the computing environment 120 decreases relative to a penalty assigned for the action and state. In an embodiment, at 231, the autonomous process scheduler avoids peaks and valleys in resource utilization within the computing environment 120 during execution of the process.

At 240, the autonomous process scheduler triggers the process to run at the optimal execution time. In an embodiment, this is performed by process trigger manager 116 on behalf of the MLM 114. In an embodiment, at 241, the autonomous process scheduler assigns penalties when resource usage spikes are encountered during execution of the process and when the execution time is not within the acceptable time frame.

At 250, the autonomous process scheduler, using the MLM 114, monitors resource utilization across a timeline during execution of the process. In an embodiment, at 251, the autonomous process scheduler tracks processor load, memory load, disk load, and network bandwidth usage within the computing environment 120.

In an embodiment, at 260, the autonomous process scheduler, using the MLM 114, adapts scheduling strategies based on monitored resource utilization to optimize further executions of the process within the computing environment 120. In an embodiment, at 270, the autonomous process scheduler generates a visual graphic of resource loads during execution of the process within the computing environment 120. In an embodiment, at 280, the autonomous process scheduler receives user-inputted criteria and generates a report based on the criteria and monitored resource utilization.

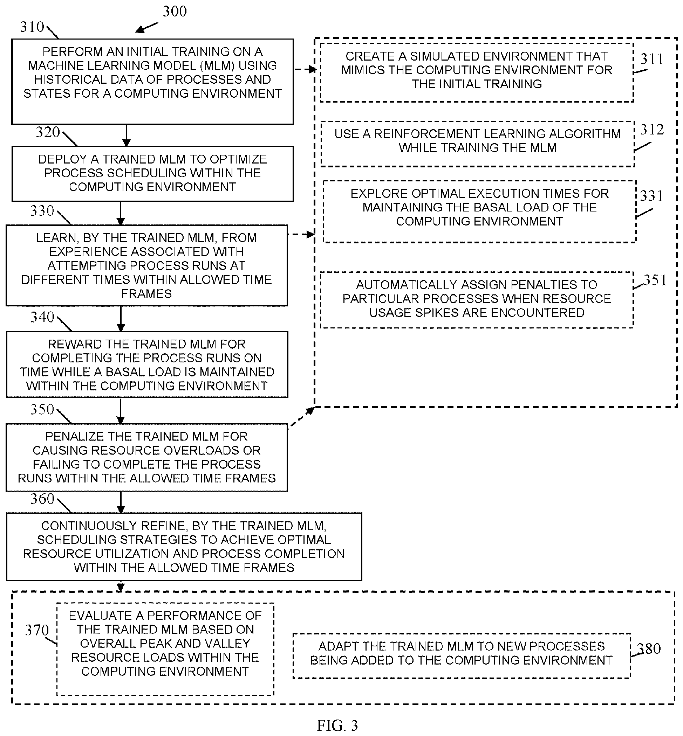

FIG. 3 is a diagram of another method 300 for operating an MLM process scheduler, according to an example embodiment. The software module(s) that implements the method 300 is referred to as an "autonomous data center process scheduler." The autonomous data center process scheduler is implemented as executable instructions programmed and residing within memory and/or a non-transitory computer-readable (processor-readable) storage medium and executed by one or more processors of a device. The processors that execute the autonomous data center process scheduler are specifically configured and programmed for processing the autonomous data center process scheduler. The autonomous data center process scheduler may have access to one or more network connections during its processing. The network connections can be wired, wireless, or a combination of wired and wireless.

In an embodiment, the device that executes the autonomous data center process scheduler is cloud 110. In an embodiment, the device that executes the autonomous data center process scheduler is a server. In an embodiment, the autonomous data center process scheduler is all or some combination of MLM trainer 113, MLM 114, metrics and report manager 115, and/or method 200 of FIG. 2. The autonomous data center process scheduler presents another, and in some ways an enhanced processing perspective from that which was described above with method 200 of FIG. 2.

At 310, the autonomous data center process scheduler performs an initial training on an MLM 114 using historical data of processes and states for a computing environment 120. In an embodiment, at 311, the autonomous data center process scheduler creates a simulated environment that mimics the computing environment 120 for the initial training. In an embodiment, at 312, the autonomous data center process scheduler uses a reinforcement learning algorithm while training the MLM 114.

At 320, the autonomous data center process scheduler deploys a trained MLM 114 to optimize process scheduling within the computing environment 120. At 330, the MLM 114 learns from experience associated with attempting process runs at different times within allowed time frames. In an embodiment, at 331, the autonomous data center process scheduler explores optimal execution times for maintaining a basal load of the computing environment 120.

At 340, the trained MLM 114 is rewarded for completing the process runs on time while a basal load is maintained within the computing environment. At 350, the trained MLM 114 is penalized for causing resource overloads or for failing to complete the process runs within the allowed time frames. In an embodiment, at 351, the trained MLM 114 automatically assigns penalties to particular resources when resource usage spikes are encountered within the computing environment 120.

At 360, the trained MLM 114 continuously refines scheduling strategies to achieve optimal resource utilization and process completion within the allowed time frames. In an embodiment, at 370, the autonomous data center process scheduler evaluates a performance of the trained MLM 114 based on overall peak and valley resource loads within the computing environment 120. In an embodiment, at 380, the autonomous data center process scheduler adapts the trained MLM 114 to new processes being added to the computing environment 120.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method, comprising:
receiving, by a machine learning model (MLM), historical data of at least one process and at least one current state from a computing environment;
obtaining, by the MLM, at least one acceptable time frame for each process within which the at least one process is to be executed within the computing environment;
determining, by the MLM, at least one execution time for the at least one process;
triggering the at least one process to run at the at least one execution time; and
monitoring, by the MLM, resource utilization for the computing environment across a timeline during execution of the at least one process.

2. The method of claim 1, wherein receiving further comprises identifying, from the historical data, runtime and usage information for the at least one process within the computing environment.

3. The method of claim 1 or claim 2, wherein receiving further comprises identifying, from the at least one current state, one or more of available resources or waiting processes in the computing environment.

4. The method of any preceding claim, wherein obtaining further comprises associating the at least one acceptable time frame with the at least one process; and/or
wherein determining further comprises avoiding peaks and valleys in resource utilization within the computing environment during execution of the at least one process.

5. The method of any preceding claim, wherein triggering further comprises assigning penalties when resource usage spikes are encountered during execution of the at least one process and when the at least one execution time is not within the at least one acceptable time frame; and/or
wherein monitoring further comprises tracking processor load, memory load, disk load, and network bandwidth usage within the computing environment.

6. The method of any preceding claim, further comprising assigning penalties when resource usage spikes are encountered during execution of the at least one process; and/or
further comprising adapting scheduling strategies based on monitored resource utilization to optimize further executions of the at least one process within the computing environment.

7. The method of any preceding claim, further comprising, generating at least one visual graphic of resource loads during execution of the at least one process within the computing environment.

8. The method of any preceding claim, further comprising, receiving user-inputted criteria and generating at least one report based on the user-inputted criteria and monitored resource utilization.

9. A method, comprising:
performing an initial training on a machine learning model (MLM) using historical data of processes and states for a computing environment;
deploying a trained MLM to optimize process scheduling within the computing environment;
learning, by the trained MLM, from experience associated with attempting process runs at different times within allowed time frames;
rewarding the trained MLM for completing the process runs on time while a basal load is maintained within the computing environment;
penalizing the trained MLM for causing resource overloads or failing to complete the process runs within the allowed time frames; and
continuously refining, by the trained MLM, scheduling strategies to achieve optimal resource utilization and process completion within the allowed time frames.

10. The method of claim 9, wherein performing further comprises creating a simulated environment that mimics the computing environment for the initial training.

11. The method of claim 9 or claim 10, wherein performing further comprises using a reinforcement learning algorithm while training the MLM; and/or
wherein learning further comprises exploring optimal execution times for maintaining the basal load of the computing environment.

12. The method of any of claims 9 to 11, wherein penalizing further comprises automatically assigning penalties to particular processes when resource usage spikes are encountered.

13. The method of any of claims 9 to 12, further comprising, evaluating a performance of the trained MLM based on overall peak and valley resource loads within the computing environment; and/or
further comprising, adapting the trained MLM to new processes being added to the computing environment.

14. A system, comprising:
a processor;
a non-transitory computer-readable storage medium comprising instructions;
the instructions when executed by the processor cause the processor to perform operations comprising:
performing an initial training on a machine learning model (MLM) using historical data of processes and states for a computing environment;
deploying the trained MLM to optimize process scheduling within the computing environment;
receiving, by the trained MLM, updated historical data of the processes and current states for the computing environment;
obtaining, by the trained MLM, allowed time frames for each process within which a corresponding process is to be executed within the computing environment;
determining, by the trained MLM, execution times for the processes;
triggering the processes to run at the execution times;
monitoring, by the trained MLM, resource utilization across a timeline during execution of the processes;
learning, by the trained MLM, from experience by attempting process runs at different times within the allowed time frames;
rewarding the trained MLM for completing the process runs on time and maintaining a basal load for the computing environment;
penalizing the trained MLM for causing resource overloads or failing to complete the process runs within the allowed time frames; and
continuously refining, by the trained MLM, scheduling strategies to achieve better resource utilization and completion of the process runs within the allowed time frames.

15. The system of claim 14, wherein the operations further comprise:
generating visual graphics of resource loads during the process runs; and
presenting the visual graphics through a user interface to end users who are operating user-operated devices.
